(19) Europäisches Patentamt
European Patent Office
Office européen des brevets

(11) **EP 4 730 665 A1**

(12) **EUROPEAN PATENT APPLICATION**

(43) Date of publication:
**22.04.2026 Bulletin 2026/17**

(21) Application number: **25207585.8**

(22) Date of filing: **08.10.2025**

(51) International Patent Classification (IPC):
*H04B 7/0413* $^{(2017.01)}$    *H04L 25/02* $^{(2006.01)}$

(52) Cooperative Patent Classification (CPC):
**H04B 7/0413; H04L 25/0202**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **21.10.2024 KR 20240144348**

(71) Applicant: **Samsung Electronics Co., Ltd.**
**Suwon-si, Gyeonggi-do 16677 (KR)**

(72) Inventors:
• **CHOI, Yeonjoon**
  **16677 Suwon-si (KR)**
• **SEO, Junyeong**
  **16677 Suwon-si (KR)**
• **JOO, Hyunseung**
  **16677 Suwon-si (KR)**

(74) Representative: **Marks & Clerk LLP**
**15 Fetter Lane**
**London EC4A 1BW (GB)**

(54) **ELECTRONIC DEVICE AND OPERATING METHOD THEREOF**

(57) An electronic device includes a communication circuit including 2N reception antennas, and a communication processor including a covariance matrix generation circuit that generates a covariance matrix for the 2N reception antennas based on a measurement of a received signal, and a whitening filter matrix generation circuit that calculates a whitening filter for N reception antennas based on Cholesky decomposition. The covariance matrix includes a first sub-matrix, a second sub-matrix, a third sub-matrix, and a fourth sub-matrix, and the whitening filter matrix generation circuit calculates a whitening filter matrix for the 2N reception antennas based on characteristics of a first whitening filter matrix and the Cholesky decomposition for the first sub-matrix corresponding to a diagonal sub-matrix of the covariance matrix.

## FIG. 5

EP 4 730 665 A1

**Description**

BACKGROUND

The present disclosure relates to an electronic device, and more particularly, to an electronic device for calculating a whitening filter and an operating method thereof.

To increase channel capacity or support a plurality of users, various techniques such as spatial diversity and spatial multiplexing based on various antennas have been introduced. Furthermore, the number of supported antennas is gradually increasing. For example, support for eight reception antennas from four existing reception antennas is considered. Furthermore, in order to support higher throughput in a next generation communication system such as 6G communication, more antennas (e.g., 16 or more reception antennas) may need to be supported. However, considering that the computational complexity for controlling interference increases exponentially as the number of antennas increases, implementation of hardware and software may not be easily implemented due to high complexity. Accordingly, there is a need for a method capable of controlling interference while lowering computational complexity according to an increasing number of antennas.

SUMMARY

It is an aspect to provide an electronic device based on a whitening filter that reuses a whitening filter corresponding to a small number of reception antennas and an operating method thereof.

According to an aspect of one or more embodiments, there is provided an electronic device comprising a communication circuit comprising 2N reception antennas; and a communication processor including a covariance matrix generation circuit that generates a covariance matrix for the 2N reception antennas based on a measurement of a received signal, and a whitening filter matrix generation circuit that calculates a whitening filter for N reception antennas based on Cholesky decomposition. The covariance matrix includes a first sub-matrix, a second sub-matrix, a third sub-matrix, and a fourth sub-matrix, and the whitening filter matrix generation circuit calculates a whitening filter matrix for the 2N reception antennas based on characteristics of a first whitening filter matrix and the Cholesky decomposition for the first sub-matrix corresponding to a diagonal sub-matrix of the covariance matrix.

According to another aspect of one or more embodiments, there is provided an operating method of an electronic device including 2N reception antennas, the operating method comprising generating a covariance matrix for the 2N reception antennas based on a measurement of a received signal, the covariance matrix including a first sub-matrix corresponding to a diagonal sub-matrix of the covariance matrix, a second sub-matrix, a third sub-matrix and a fourth sub-matrix; calculating a first whitening filter matrix for the first sub-matrix; calculating a second whitening filter matrix based on the third sub-matrix of the covariance matrix and the first whitening filter matrix; and calculating a third whitening filter matrix satisfying a Cholesky decomposition for the fourth sub-matrix of the covariance matrix and a substitution matrix based on the second whitening filter.

According to yet another aspect of one or more embodiments, there is provided a communication processor connected to 2N reception antennas, the communication processor comprising a covariance matrix generation circuit that generates a covariance matrix for the 2N reception antennas based on a measurement of a received signal; and a whitening filter matrix generation circuit that calculates a whitening filter for N reception antennas based on Cholesky decomposition. The covariance matrix includes a first sub-matrix corresponding to a diagonal sub-matrix of the covariance matrix, a second sub-matrix, a third sub-matrix, and a fourth sub-matrix, and the whitening filter matrix generation circuit calculates a whitening filter matrix for the 2N reception antennas based on characteristics of a first whitening filter matrix and the Cholesky decomposition for the first sub-matrix.

At least some of the above and other features of the invention are set out in the claims.

BRIEF DESCRIPTION OF THE DRAWINGS

Various embodiments will be more clearly understood from the following detailed description taken in conjunction with the accompanying drawings, in which:

FIG. 1 is a diagram illustrating a wireless communication system according to an embodiment;
FIG. 2 is a block diagram of a reception device according to embodiments;
FIG. 3 is a detailed block diagram of a communication circuit according to embodiments;
FIG. 4 is a diagram illustrating a multiple input multiple output (MIMO) environment according to embodiments;
FIG. 5 is a block diagram of a communication processor according to embodiments;
FIG. 6 is a diagram illustrating an example of a whitening filter matrix generation circuit according to embodiments;
FIG. 7 is a block diagram of a communication processor according to embodiments;

FIG. 8A is a block diagram of a communication processor according to embodiments;

FIG. 8B is a diagram illustrating an example of a block-unit covariance matrix according to embodiments;

FIG. 9 is a flowchart illustrating an operating method of a communication processor according to embodiments;

FIG. 10 is a flowchart illustrating an operating method of a communication processor according to embodiments; and

FIG. 11 is a block diagram of a wireless communication device according to an embodiment.

DETAILED DESCRIPTION

Hereinafter, various embodiments will be described in detail with reference to the accompanying drawings. As used in this specification, a phrase using the form "at least one of A, B, or C" includes within its scope "only A", "only B", "only C", "A and B", "A and C", "B and C" and "A, B, and C."

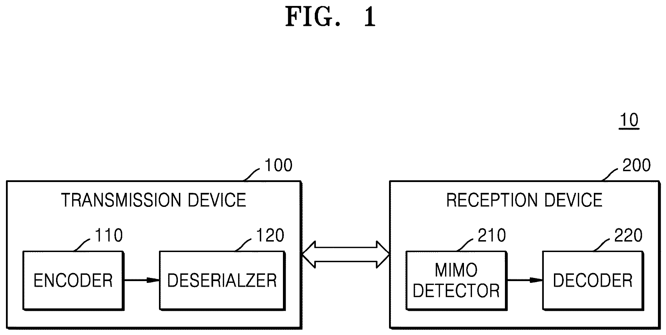

FIG. 1 is a diagram illustrating a wireless communication system according to an embodiment.

Referring to FIG. 1, a wireless communication system 10 may include a transmission device 100 and a reception device 200. The transmission device 100 may refer to a device for encoding data and transmitting a signal to the reception device 200 through a wireless channel. For example, when the signal is an uplink signal, the transmission device 100 may correspond to a user equipment (UE), and the reception device 200 may correspond to a base station. In another example, when the signal is a downlink signal, the transmission device 100 may correspond to a base station and the reception device 200 may correspond to a user equipment.

According to an embodiment, the transmission device 100 may include an encoder 110 and a deserializer 120. The encoder 110 may encode data according to various encoding techniques. For example, the encoder 110 may perform encoding on data based on at least one of a turbo code, a convolution code, or a polar code. The deserializer 120 may deserialize a series of bit strings. The deserializer 120 may receive a bit string of a codeword encoded from the encoder 110 and deserialize the series of bit strings by a number of multiple inputs. For example, the deserializer 120 may deserialize the series of bit strings and map the bit strings to each of a plurality of layers. The plurality of layers may correspond to each rank of a multiple input multiple output (MIMO) wireless communication system. For example, in the case that the wireless communication system 10 is a 4x4 MIMO wireless communication system, the series of bit strings may be deserialized into four bit strings.

According to an embodiment, the reception device 200 may include a MIMO detector 210 and a decoder 220. The MIMO detector 210 may detect a MIMO signal. The MIMO detector 210 may generate soft decision information in the process of detecting the MIMO signal to perform error correction through the decoder 220. For example, the MIMO detector 210 may be based on a linear detection technique using a minimum mean squared error (MMSE), a zero-forcing (ZF), and/or a matched filter (MF), or a nonlinear detection technique using a maximum likelihood (ML).

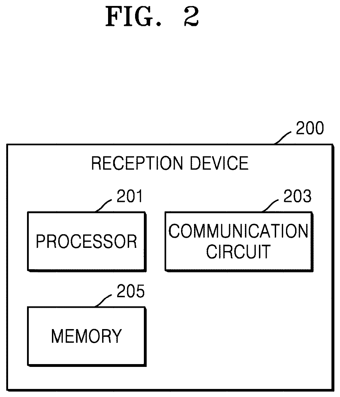

FIG. 2 is a block diagram of a reception device 200 according to embodiments.

Referring to FIG. 2, the reception device 200 may include a processor 201, a communication circuit 203, and a memory 205.

The processor 201 may control overall operations of the reception device 200. For example, the processor 201 may transmit and receive a signal to and from the transmission device 100 through the communication circuit 203. Furthermore, the processor 201 may write and read data to and from the memory 205. A part of the communication circuit 203 and the processor 201 may be referred to as a communication processor.

The communication circuit 203 performs functions for transmitting and receiving signals to and from the transmission device through a wireless channel. For example, the communication circuit 203 performs a conversion function between a baseband signal and a bit stream according to the physical layer specification of the system. For example, when transmitting data to the transmission device 100, the communication circuit 203 may generate complex symbols by encoding and modulating a transmission bit string, and when receiving data from the transmission device 100, the communication circuit 203 may restore a reception bit string by demodulating and decoding a baseband signal. The communication circuit 203 may up-convert a baseband signal into an RF band signal and then transmit the RF band signal through an antenna, or down-convert an RF band signal received through the antenna into a baseband signal. For example, the communication circuit 203 may include a transmission filter, a reception filter, an amplifier, a mixer, an oscillator, a digital-to-analog converter (DAC), an analog-to-digital converter (ADC), and/or the like. The communication circuit 203 may perform beamforming. The communication circuit 203 may apply a beamforming weight to the signal to be transmitted/received to/from the transmission device 100 in order to give directionality to the signal to be transmitted/received. According to an embodiment, the communication circuit 203 may receive a spatially multiplexed MIMO signal through the MIMO detector 210 and obtain an error-corrected bit string through the decoder 220.

The memory 205 may store data such as a basic program, an application program, and/or setting information for the operation of the reception device 200. The memory 205 may include a volatile memory, a nonvolatile memory, or a combination of a volatile memory and a nonvolatile memory. The memory 205 may provide stored data according to a request from the processor 201.

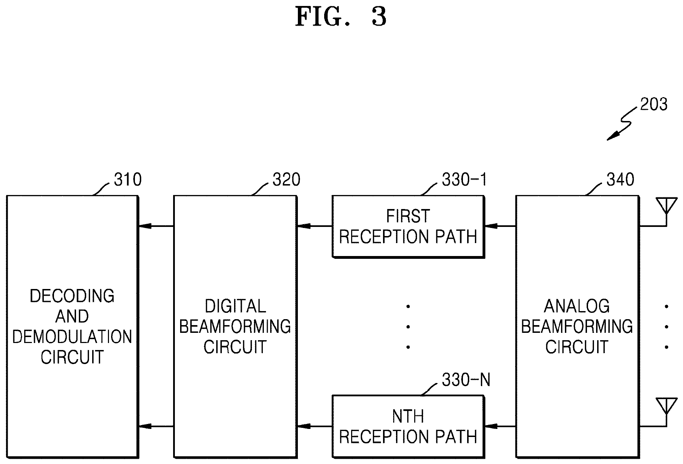

FIG. 3 is a detailed block diagram of a communication circuit 203 according to embodiments.

Referring to FIG. 3, the communication circuit 203 may include a decoding and demodulation circuit 310, a digital beamforming circuit 320, a first reception path 330-1 to an Nth reception path 330-N, and an analog beamforming circuit 340.

According to embodiments, the decoding and demodulation circuit 310 may perform channel decoding. For channel decoding, at least one of a low density parity check (LDPC) code, a convolution code, a polar code, or a turbo code may be used. For example, the decoding and demodulation circuit 310 may correspond to the decoder 220 of the reception device 200 in FIG. 1.

The digital beamforming circuit 320 multiplies the analog signals received through the first reception path 330-1 to the Nth reception path 330-N by beamforming weights. Here, the beamforming weights are used to change the magnitudes and phases of the signals. In this case, the modulated symbols multiplexed according to the MIMO transmission technique may be received through the first reception path 330-1 to the Nth reception path 330-N.

The analog beamforming circuit 340 performs beamforming on analog signals. The analog beamforming circuit 340 may perform beamforming on analog reception beams to receive an MIMO signal.

Each of the first reception path 330-1 to the Nth reception path 330-N may include a fast Fourier transform (FFT) operation circuit, an analog-to-digital converter, a CP (cyclic prefix) removal circuit, a serial-parallel conversion circuit, and a down converter. Each of the first reception path 330-1 to the Nth reception path 330-N may down-convert the received signal to a baseband frequency, remove the CP to generate a serial time domain baseband signal, convert the serial time domain baseband signal to parallel time domain signals, perform an FFT algorithm to generate N parallel frequency domain signals, and convert the parallel frequency domain signals into a sequence of modulated data symbols. That is, the first reception path 330-1 to the Nth reception path 330-N may provide an independent signal processing process for a plurality of streams generated through digital beamforming. However, depending on the implementation method, some of the components of the first reception path 330-1 to the Nth reception path 330-N may be commonly used.

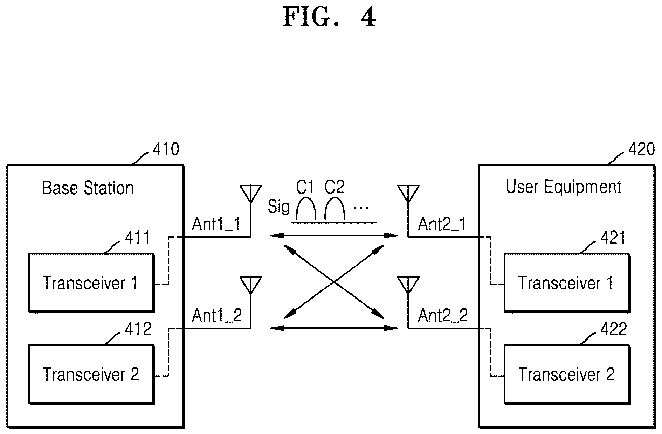

FIG. 4 is a diagram illustrating a MIMO environment according to embodiments.

Referring to FIG. 4, a base station 410 and a user equipment 420 may communicate with each other using a MIMO method. To this end, the base station 410 may include a plurality of antennas Ant1, and the user equipment 420 may include a plurality of antennas Ant2. Although FIG. 4 illustrates that the base station 410 includes two antennas Ant1 (Ant1_1 and Ant1_2), and the user equipment 420 includes two antennas Ant2 (Ant2_1 and Ant2_2), embodiments are not limited thereto. It will be appreciated that the description herein is equally applicable to embodiments in which the base station 410 and the user equipment 420 may each include more than two antennas.

The base station 410 may include a first transceiver 411, a second transceiver 412, a first antenna Ant1_1, and a second antenna Ant1_2. Each of the first transceiver 411 and the second transceiver 412 may be connected to one antenna. For example, the first transceiver 411 may be connected to the first antenna Ant1_1, and the second transceiver 412 may be connected to the second antenna Ant1_2. When the base station 410 operates as a transmission device, each of the first transceiver 411 and the second transceiver 412 may operate as a transmitter, and when the base station 410 operates as a reception device, each of the first transceiver 411 and the second transceiver 412 may operate as a receiver.

The first transceiver 411 may generate a first signal Sig by merging a first component carrier signal C1 with a second component signal C2 in a transmission mode, and output the generated first signal Sig to the user equipment 420. The first transceiver 411 may extract not only the first component carrier C1 but also the second component carrier C2 from the first signal Sig. Each of the first transceiver 411 and the second transceiver 412 may merge and transmit a plurality of component carrier signals rather than transmitting only one component carrier signal, and may extract a plurality of component carrier signals from the first signal Sig, rather than extracting only one component carrier signal from the first signal Sig. The user equipment 420 may include a third transceiver 421, a fourth transceiver 422, a third antenna Ant2_1 and a fourth antenna Ant2_2. Since the user equipment 420 may be substantially the same as or similar to the base station 410, a description thereof is omitted for conciseness.

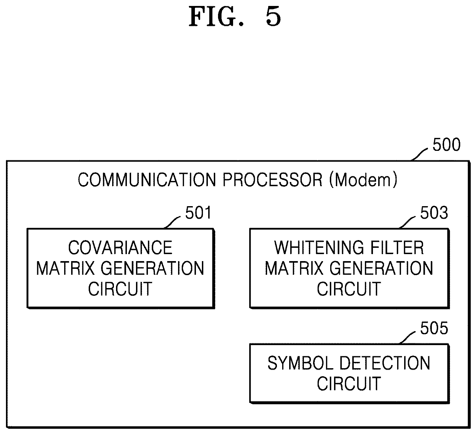

FIG. 5 is a block diagram of a communication processor 500 according to embodiments.

Referring to FIG. 5, the communication processor 500 may include a covariance matrix generation circuit 501, a whitening filter matrix generation circuit 503, and a symbol detection circuit 505. The communication processor 500 may also be referred as a modem. According to embodiments, the communication processor 500 of FIG. 5 may include a portion of the communication circuit 203 of FIG. 2 and the processor 201.

According to an embodiment, a reception signal of a wireless environment in which interference exists is as follows.

[Equation 1]

$$\mathbf{y} = \mathbf{Hx} + \mathbf{v}$$

Here, $\mathbf{y}$ denotes a received signal vector of size $n_r \times 1$, $\mathbf{H}$ denotes a channel matrix of size $n_r \times n_t$, $\mathbf{x}$ denotes a transmission signal vector of size $n_t \times 1$ and $\mathbf{v}$ denotes a received interference and noise vector of size $n_r \times 1$. Assuming

one strong interference with $n_i$ antennas, **v** may be expressed as follows.

[Equation 2]

$$\mathbf{v} = \mathbf{H}_{\mathbf{I}}\mathbf{x}_{\mathbf{I}} + \mathbf{n}$$

Here, $\mathbf{H}_\mathbf{I}$ denotes an interference channel matrix of size $n_r \times n_i$, $\mathbf{x}_\mathbf{I}$ denotes an interference signal vector of size $n_i \times 1$ with unit variance, and ***n*** denotes an additive white Gaussian noise (AWGN) vector with a zero mean and $\sigma^2\mathbf{I}$ variance. Since **v** includes not only noise but also interference components, **v** may not have white characteristics like general noise due to interference. In this case, the covariance matrix **R** may be expressed as follows.

[Equation 3]

$$\begin{aligned}\mathbf{R} \quad &= \mathrm{E}\{\mathbf{v}\mathbf{v}^{\mathrm{H}}\} \\ &= \mathbf{H}_\mathbf{I}\mathbf{H}_\mathbf{I}^{\mathrm{H}} + \sigma^2\mathbf{I}\end{aligned}$$

The terminal does not know the value of the covariance matrix **R**, but may estimate the following for a resource element (RE) allocated with a demodulation reference signal (DMRS) or a cell-specific reference signal (CRS) in one resource block (RB).

[Equation 4]

$$\begin{aligned}\hat{\mathbf{R}} \quad &= \mathrm{E}\{\hat{\mathbf{v}}\hat{\mathbf{v}}^{H}\} \\ &= \mathrm{E}\left\{(\mathbf{y} - \hat{\mathbf{H}}\mathbf{x})(\mathbf{y} - \hat{\mathbf{H}}\mathbf{x})^{H}\right\} \\ &= \frac{1}{|S|}\sum_{(k,l)\in S}\left(\mathbf{y}(k,l) - \hat{\mathbf{H}}(k,l)\mathbf{x}(k,l)\right)\left(\mathbf{y}(k,l) - \hat{\mathbf{H}}(k,l)\mathbf{x}(k,l)\right)^{H}\end{aligned}$$

Here, $S$ represents a set of RE indexes for the reference signal (RS) within the RB, and $(k, l)$ represents an RE index having a subcarrier index $k$ and a symbol index $l$. In addition, $\hat{\mathbf{H}}$ denotes an estimated channel matrix. Since the terminal receiving the signal also generates the RS sequence based on the RE position to which the DMRS or CRS is assigned and knows the exact **x,** the estimated noise covariance matrix $\hat{\mathbf{R}}$ may be obtained.

In this case, since $\hat{\mathbf{R}}$ denotes a Hermitian positive-definite matrix, Cholesky decomposition may be applied as follows, and the results of the application may be expressed as follows.

[Equation 5]

$$\hat{\mathbf{R}} = \mathbf{L}\mathbf{L}^{H}$$

Here, **L** denotes a lower triangular matrix with a real positive diagonal element. It may be seen that the inverse matrix $\mathbf{L}^{-1}$ using **L** may be used as a filter for whitening noise containing interference as follows.

[Equation 6]

$$\begin{aligned}
\mathrm{E}\{(\mathbf{L}^{-1}\mathbf{v})(\mathbf{L}^{-1}\mathbf{v})^H\} &= \mathbf{L}^{-1}\mathrm{E}\{\mathbf{v}\mathbf{v}^H\}(\mathbf{L}^{-1})^H \\
&= \mathrm{E}\{(\mathbf{y}-\mathbf{Hx})(\mathbf{y}-\mathbf{Hx})^H\} \\
&= \mathrm{E}\left\{(\mathbf{y}-\hat{\mathbf{H}}\mathbf{x})(\mathbf{y}-\hat{\mathbf{H}}\mathbf{x})^H\right\} \\
&= \mathbf{L}^{-1}\mathrm{E}\{\hat{\mathbf{v}}\hat{\mathbf{v}}^H\}(\mathbf{L}^{-1})^H \\
&= \mathbf{L}^{-1}\hat{\mathbf{R}}(\mathbf{L}^{-1})^H \\
&= \mathbf{L}^{-1}\mathbf{L}\mathbf{L}^H(\mathbf{L}^{-1})^H \\
&= \mathbf{L}^{-1}\mathbf{L}(\mathbf{L}^{-1}\mathbf{L})^H \\
&= \mathbf{I}
\end{aligned}$$

The covariance matrix generation circuit 501 may measure the covariance between signals received through respective antennas and output the measured covariance as a matrix. For example, when the number of reception antennas is 4, the covariance matrix may be as follows.

[Equation 7]

$$\boldsymbol{R} = \begin{bmatrix} r_{00} & r_{01} & r_{02} & r_{03} \\ r_{10} & r_{11} & r_{12} & r_{13} \\ r_{20} & r_{21} & r_{22} & r_{23} \\ r_{30} & r_{31} & r_{32} & r_{33} \end{bmatrix}$$

Here, $\boldsymbol{R}$ denotes a covariance matrix, and each of rows and columns of the covariance matrix may correspond to a reception antenna. For example, $r_{00}$ may indicate a correlation (e.g., autocorrelation) between the first reception antenna and the first reception antenna, $r_{01}$ may indicate a correlation between the first reception antenna and the second reception antenna, $r_{02}$ may indicate a correlation between the first reception antenna and the third reception antenna, and $r_{03}$ may indicate a correlation between the first reception antenna and the fourth reception antenna. In addition, $r_{10}$ may indicate a correlation between the second reception antenna and the first reception antenna, $r_{20}$ may indicate a correlation between the third reception antenna and the first reception antenna, and $r_{30}$ may indicate a correlation between the fourth reception antenna and the first reception antenna. According to an embodiment, when the number of reception antennas is 8, the size of the covariance matrix may be 8×8, and when the number of reception antennas is 16, the size of the covariance matrix may be 16×16.

According to an embodiment, the whitening filter matrix generation circuit 503 may calculate a high-level whitening filter matrix based on a low-level whitening filter matrix. The low-level whitening filter matrix may be a whitening filter matrix corresponding to N reception antennas, and the high-level whitening filter matrix may be a whitening filter matrix corresponding to 2N antennas (e.g., where N is a positive integer). For example, a low-level whitening filter matrix may be a 2x2 matrix corresponding to two reception antennas, and a high-level whitening filter matrix may be a 4x4 matrix corresponding to four reception antennas. The term "level" may refer to the relative dimensionality. That is a low-level matrix may be smaller than a high-level matrix. The size N of an N x N matrix may be based on the level n such that $N = 2^n$.

According to an embodiment, the whitening filter matrix generation circuit 503 may be based on a block-unit inverse matrix. The block-unit inverse matrix is equivalent to replacing a 2N×2N matrix with four sub-matrices of size N×N.

For example, if $\mathbf{L}$ is a 2Nx2N matrix in $\hat{\mathbf{R}} = \mathbf{L}\mathbf{L}^H$, $\mathbf{L}$ may be expressed as $\begin{bmatrix} \boldsymbol{A} & \boldsymbol{B} \\ \boldsymbol{C} & \boldsymbol{D} \end{bmatrix}$. Here, each of $\boldsymbol{A}$ to $\boldsymbol{D}$ may correspond to a matrix of size N×N. The whitening filter $\boldsymbol{L}^{-1}$ based on the block-unit inverse matrix is expressed as follows.

[Equation 8]

$$\begin{bmatrix} \boldsymbol{A} & \boldsymbol{B} \\ \boldsymbol{C} & \boldsymbol{D} \end{bmatrix}^{-1} = \begin{bmatrix} (A-BD^{-1}C)^{-1} & -(A-BD^{-1}C)^{-1}BD^{-1} \\ -D^{-1}C(A-BD^{-1}C)^{-1} & D^{-1}+D^{-1}C(A-BD^{-1}C)^{-1}BD^{-1} \end{bmatrix}$$

Here, each of *A* to D may correspond to a low-level matrix. For example, if $\begin{bmatrix} A & B \\ C & D \end{bmatrix}^{-1}$ is assumed to be a high-level whitening filter matrix, each of *A* to *D* may be a matrix of the same size as a low-level whitening filter matrix. For example, if the high-level whitening filter is in a 4x4 size, each of *A* to *D* may be a matrix of size 2x2.

Based on the Cholesky decomposition described above, **L** is a lower triangular matrix, and thus, zero may be substituted for the **B** component. In this case, the high-level whitening filter matrix may be expressed as follows.

[Equation 9]

$$\begin{bmatrix} A & 0 \\ C & D \end{bmatrix}^{-1} = \begin{bmatrix} A^{-1} & 0 \\ -D^{-1}CA^{-1} & D^{-1} \end{bmatrix}$$

According to an embodiment, when the size of the high-level whitening filter matrix is 4×4, it may be expressed as follows.

[Equation 10]

$$R = \begin{bmatrix} r_{00} & r_{01} & r_{02} & r_{03} \\ r_{10} & r_{11} & r_{12} & r_{13} \\ r_{20} & r_{21} & r_{22} & r_{23} \\ r_{30} & r_{31} & r_{32} & r_{33} \end{bmatrix}$$

$$= \begin{bmatrix} R_0 & R_1 \\ R_2 & R_3 \end{bmatrix}$$

$$= LL^H$$

$$= \begin{bmatrix} A & 0 \\ C & D \end{bmatrix} \begin{bmatrix} A^H & C^H \\ 0 & D^H \end{bmatrix}$$

$$= \begin{bmatrix} AA^H & AC^H \\ CA^H & CC^H + DD^H \end{bmatrix}$$

According to an embodiment, based on Equation 5 described above, since $R_0 = AA^H$ denotes a calculation of an N×N whitening filter matrix (which is in the same form as $\hat{R} = LL^H$ in Equation 5), the whitening filter matrix generation circuit 503 may obtain $A^{-1}$ based on the N×N whitening filter matrix calculation of $R_0 = AA^H$. Thereafter, the whitening filter matrix generation circuit 503 may calculate C as follows based on the previously obtained $A^{-1}$ and $R_2 = CA^H$.

[Equation 11]

$$C = R_2(A^H)^{-1}$$
$$= R_2(A^{-1})^H$$

Thereafter, the whitening filter matrix generation circuit 503 may calculate $D^{-1}$ as follows based on the previously obtained *C* and $R_3 = CC^H + DD^H$.

[Equation 12]

$$DD^H = R_3 - CC^H$$

Specifically, $D^{-1}$ may be calculated by substituting the right side as $R_3 - CC^H = R'$. Because, based on Equation 5 and the substitution, $R' = DD^H$ is a calculation of a whitening filter matrix of size NxN (which has the same form as $\hat{R} = LL^H$ in Equation 5), the whitening filter matrix generation circuit 503 may obtain a high-level whitening filter matrix W according to Equation 9, as follows.

[Equation 13]

$$\mathbf{W} = \mathbf{L}^{-1} \quad = \begin{bmatrix} A & 0 \\ C & D \end{bmatrix}^{-1}$$
$$= \begin{bmatrix} A^{-1} & 0 \\ -D^{-1}CA^{-1} & D^{-1} \end{bmatrix}$$

According to an embodiment, the symbol detection circuit 505 may detect a symbol based on a signal to which a whitening filter is applied. For example, the whitening filter matrix generation circuit 503 may perform whitening on a received signal by using a high-level whitening filter matrix obtained based on a low-level whitening filter matrix. Thereafter, the symbol detection circuit 505 may calculate an ML with respect to the whitened signal and detect the symbol based on the ML calculation result.

In the embodiment described above, it has been described that the whitening filter matrix generation circuit 503 is disposed inside the communication processor 500, but embodiments are not limited thereto. According to various embodiments, the whitening filter matrix generation circuit 503 may be implemented as a separate block outside the communication processor 500.

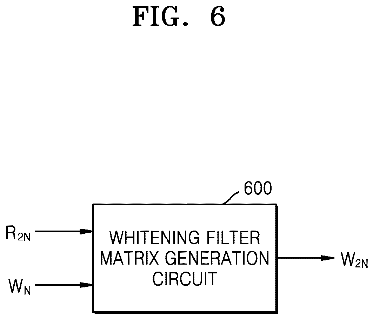

FIG. 6 is a diagram illustrating an example of a whitening filter matrix generation circuit 600 according to embodiments.

Referring to FIG. 6, the whitening filter matrix generation circuit 600 of FIG. 6 may correspond to the whitening filter matrix generation circuit 500 of FIG. 5. In an embodiment, the whitening filter matrix generation circuit 600 of FIG. 6 may correspond to a case in which 2N reception antennas are included.

According to an embodiment, the whitening filter matrix generation circuit 600 may receive a covariance matrix $R_{2N}$. For example, the whitening filter matrix generation circuit 600 may receive the covariance matrix $R_{2N}$ from the covariance matrix generation circuit (e.g., 501 of FIG. 5). The covariance matrix $R_{2N}$ denotes a covariance matrix for signals received by 2N reception antennas. For example, the covariance matrix $R_{2N}$ may be a matrix of size 2N×2N.

According to an embodiment, the whitening filter matrix generation circuit 600 may receive a low-level whitening filter matrix $W_N$. The whitening filter matrix generation circuit 600 may output a high-level whitening filter matrix $W_{2N}$ according to the following equation based on the low-level whitening filter matrix $W_N$, wherein $A^{-1}$ and $D^{-1}$ may correspond to the low-level whitening filter matrix $W_N$.

[Equation 14]

$$W_{2N} \quad = \begin{bmatrix} A^{-1} & 0 \\ -D^{-1}CA^{-1} & D^{-1} \end{bmatrix}$$

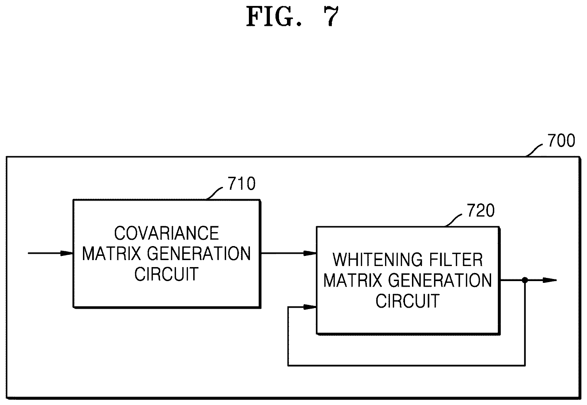

FIG. 7 is a block diagram of a communication processor 700 according to embodiments.

Referring to FIG. 7, the communication processor 700 may correspond to the communication processor 500 of FIG. 5.

According to an embodiment, the whitening filter matrix generation circuit 720 may have a recursive structure. For example, the whitening filter matrix generation circuit 720 may receive a covariance matrix $R_{2N}$ from the covariance matrix generation circuit 710. Thereafter, the whitening filter matrix generation circuit 720 may primarily calculate and feed back a low-level whitening filter matrix $W_N$. For example, the whitening filter matrix generation circuit 720 may calculate and output $A^{-1}$ and $D^{-1}$ corresponding to the low-level whitening filter matrix. The whitening filter matrix generation circuit 720 generates a low-level whitening filter matrix of $A^{-1}$ based on the calculation of $R_0 = AA^H$ of Equation 10, and the low-level whitening filter matrix of $A^{-1}$ may be fed back to the whitening filter matrix generation circuit 720 based on the recursive structure. The whitening filter matrix generation circuit 720 may acquire the C matrix based on the calculation of C = $R_2 (A^{-1})^H$ in Equation 11 and generate $D^{-1}$ based on Cholesky decomposition of $R' = DD^H$ in Equations 10 and 12. $D^{-1}$ may be fed back to the whitening filter matrix generation circuit 720 based on the recursive structure.

According to an embodiment, the whitening filter matrix generation circuit 720 may secondarily output a high-level whitening filter matrix $W_{2N}$. For example, the whitening filter matrix generation circuit 720 may obtain a high-level whitening filter matrix by substituting the primarily calculated $A^{-1}$, C, and $D^{-1}$ into Equation 14.

As described above, since the whitening filter matrix 720 having the recursive structure is provided, it is possible to calculate a whitening filter matrix having a 2N×2N size only by hardware capable of calculating a whitening filter matrix having an N×N size, thereby improving computational complexity and area complexity.

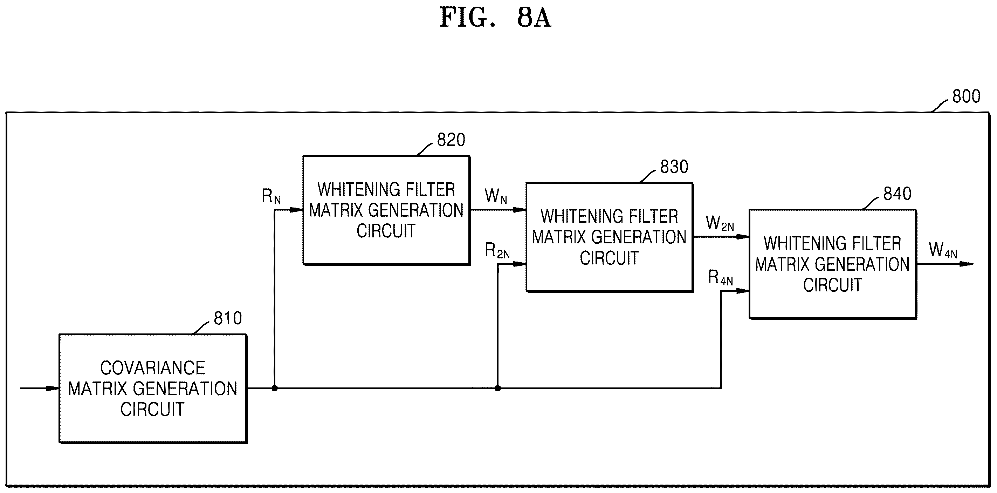

FIG. 8A is a block diagram of a communication processor 800 according to embodiments.

Referring to FIG. 8A, the communication processor 800 may correspond to the communication processor 500 of FIG. 5.

According to an embodiment, the communication processor 800 may include a covariance matrix generation circuit 810 and a plurality of whitening filter matrix generation circuits including, for example, a first whitening filter matrix generation circuit 820, a second whitening filter matrix generation circuit 830, and a third whitening filter matrix generation circuit 840. The plurality of whitening filter matrix generation circuits 820, 830, and 840 may be connected in the form of a stage based on a daisy-chain.

The first whitening filter matrix generation circuit 820 may receive a covariance matrix $R_N$ from the covariance matrix generation circuit 810. The first whitening filter matrix generation circuit 820 may calculate and output a whitening filter matrix $W_N$ based on the received covariance matrix $R_N$. In this case, the first whitening filter matrix generation circuit 820 may output the calculated whitening filter matrix $W_N$ to the second whitening filter matrix generation circuit 830.

The second whitening filter matrix generation circuit 830 may receive a covariance matrix $R_{2N}$ from the covariance matrix generation circuit 810. In addition, the second whitening filter matrix generation circuit 830 may receive the whitening filter matrix $W_N$ from the first whitening filter matrix generation circuit 820. The second whitening filter matrix generation circuit 830 may calculate and output a whitening filter matrix $W_{2N}$ based on the received covariance matrix $R_{2N}$ and the whitening filter matrix $W_N$. For example, the second whitening filter matrix generation circuit 830 may calculate $C$ by using $A^{-1}$ and $D^{-1}$ received from the first whitening filter matrix generation circuit 820 and Equation 11 and substitute the same into Equation 14 to obtain a whitening filter matrix $W_{2N}$. The second whitening filter matrix generation circuit 830 may output the calculated whitening filter matrix $W_{2N}$ to a third whitening filter matrix generation circuit 840.

The third whitening filter matrix generation circuit 840 may receive the covariance matrix $R_{4N}$ from the covariance matrix generation circuit 810. In addition, the third whitening filter matrix generation circuit 840 may receive the whitening filter matrix $W_{2N}$ from the second whitening filter matrix generation circuit 830. The third whitening filter matrix generation circuit 840 may calculate and output a whitening filter matrix $W_{4N}$ based on the received covariance matrix $R_{4N}$ and the whitening filter matrix $W_{2N}$. For example, the third whitening filter matrix generation circuit 840 may calculate $C$ by using $A^{-1}$ and $D^{-1}$ received from the second whitening filter matrix generation circuit 830 and Equation 11 and substitute the same into Equation 14 to obtain a whitening filter matrix $W_{4N}$.

As described above, since the plurality of whitening filter matrix generation circuits 820, 830, and 840 having a daisy-chain structure are provided, every time the number of reception antennas is increased by two times, a whitening filter matrix corresponding to many reception antennas may be calculated by adding circuits one by one, which may calculate N×N whitening filters, and thus computational complexity and area complexity may be greatly improved.

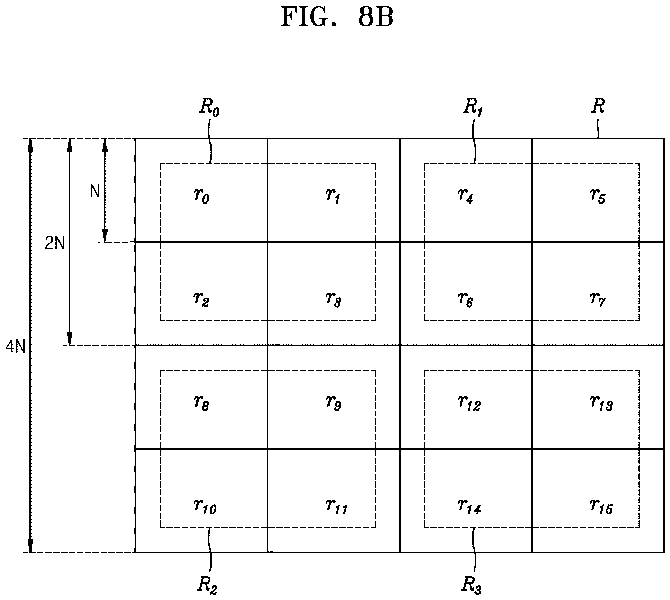

FIG. 8B is a diagram illustrating an example of a block-unit covariance matrix according to embodiments.

Referring to FIG. 8B, a covariance matrix $R$ of size 4N×4N may be divided into four block-unit sub-blocks. The covariance matrix $R$ having a 4N×4N size may be $R_{4N}$ of FIG. 8A. For example, the covariance matrix $R$ of size 4N×4N may be grouped into a first sub-block $R_0$, a second sub-block $R_1$, a third sub-block $R_2$, and a fourth sub-block $R_3$. Each of the sub-blocks $R_0$ to $R_3$ may be a matrix of size 2N×2N and may be $R_{2N}$ in FIG. 8A.

Each of the first to third sub-blocks $R_0$ to $R_3$ of size 2N×2N may be divided into four block-unit sub-blocks. For example, a 2N×2N first sub-block $R_0$ may be grouped into a 1st-1 block $r_0$, a 1st-2 block $r_2$, a 1st-3 block $r_3$, and a 1st-4 block $r_4$. The second sub-block $R_1$ may be grouped into a 2nd-1 block $r_4$, a 2nd-2 block $r_5$, a 2nd-3 block $r_6$, and a 2nd-4 block $r_7$. The third sub-block $R_2$ may be grouped into a 3rd-1 block $r_8$, a 3rd-2 block $r_9$, a 3rd-3 block $r_{10}$, and a 3rd-4 block $r_{11}$. The fourth sub-block $R_3$ may be grouped into a 4th-1 block $r_{12}$, a 4th-2 block $r_{13}$, a 4th-3 block $r_{14}$, and a 4th-4 block $r_{15}$. Each of the blocks $r_0$ to $r_{15}$ may be a matrix of size N×N and may be $R_N$ in FIG. 8A. The terms 1st-1 , 1st-2, 2nd-1, 2nd-2, etc., are numbered labels for distinguishing various sub-blocks of sub-blocks. For instance, the 1st-1 may be a first sub-block $r_0$ of the first sub-block $R_0$, the 1st-2 sub-block may be a second sub-block $r_1$ of the first sub-block $R_0$, the 2nd-1 sub-block may be a first sub-block $r_0$ of the second sub-block $R_1$, and so on.

According to an embodiment, when the whitening filter matrix corresponding to the covariance matrix $R$ having the 4N×4N size is $W_{4N}$, the following equation may be satisfied.

[Equation 15]

$$W_{4N} = L^{-1} = \begin{bmatrix} A^{-1} & 0 \\ -D^{-1}CA^{-1} & D^{-1} \end{bmatrix}$$

Here, it may be seen that $A^{-1}$ denotes a whitening filter $W_{2N}$ corresponding to the sub-block of 2N×2N size $R_0$ when referring to $R_0 = AA^H$ in Equation 10 (which is in the same form as $\hat{R} = LL^H$ in Equation 5). That is, referring to FIG. 8A together, when the whitening filter matrix generation circuit 840 acquires a 4N×4N covariance matrix ($R$ in FIG. 8B or $R_{4N}$ in FIG. 8A), and acquires $A^{-1}$ which is the whitening filter $W_{2N}$ corresponding to a 2N×2N sub-block $R_0$ (or a sub-block in the upperleft end when a 4N×4N covariance matrix ($R$ in FIG. 8B or $R_{4N}$ in FIG. 8A) is divided into four sub-blocks), the whitening filter matrix generation circuit 840 may calculate a whitening filter matrix $W_{4N}$ corresponding to a 4N×4N covariance matrix $R$. For example, the whitening filter matrix generation circuit 840 may calculate $C$ by substituting the acquired $A^{-1}$ into Equation 11, and calculate $D^{-1}$ by calculating the whitening filter for $R_3 - CC^H$ by substituting the calculated $C$ into Equation 12.

When the whitening filter matrix corresponding to the covariance matrix $R_0$ having the 2N×2N size is $W_{2N}$, the following equation may be satisfied.

[Equation 16]

$$W_{2N} = L'^{-1} = \begin{bmatrix} A'^{-1} & 0 \\ -D'^{-1}C'A'^{-1} & D'^{-1} \end{bmatrix}$$

Here, it may be seen that $A'^{-1}$ denotes a whitening filter $W_N$ corresponding to the N×N sub-block $r_0$. That is, referring to FIG. 8A together, when the whitening filter matrix generation circuit 830 acquires a 2N×2N covariance matrix ($R_0$ in FIG. 8B or $R_{2N}$ in FIG. 8A), and acquires $A'^{-1}$, which is the whitening filter $W_N$ corresponding to an N×N block $r_0$ (or a block in the upperleft end when a 2N×2N covariance matrix ($R_0$ in FIG. 8B or $R_{2N}$ in FIG. 8A) is divided into four blocks), the whitening filter matrix generation circuit 830 may calculate a whitening filter matrix $W_{2N}$ corresponding to a 2N×2N covariance matrix $R_0$. For example, the whitening filter matrix generation circuit 830 may calculate $C'$ by substituting the acquired $A'^{-1}$ into Equation 11, and calculate $D'^{-1}$ by calculating the whitening filter for $r_3 - C'C'^H$ by substituting the calculated $C'$ into Equation 12. To this end, the whitening filter generation circuit 820 may receive an N×N covariance matrix $r_0$ and output a corresponding whitening filter $W_N$ to provide the same to the whitening filter generation circuit 830.

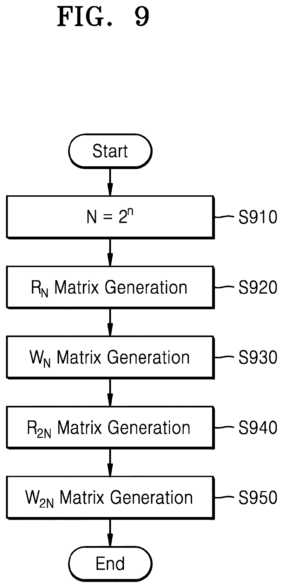

FIG. 9 is a flowchart illustrating an operating method of a communication processor according to embodiments.

Referring to FIG. 9, a communication processor (e.g., 500 of FIG. 5) may determine a start level of the whitening filter matrix in operation S910. For example, the start level may be $n$. The whitening filter matrix of the level $n$ may be $W_N$. In this case, it may be considered $N = 2^n$. For example, the start level may be determined such that the number of existing antennas is the same as the size of the whitening filter matrix. For example, when the number of reception antennas is two, $n=1$.

In operation S920, the communication processor 500 may generate a covariance matrix of the level $n$. The covariance matrix of the level $n$ may be $R_N$ having an N×N size. According to an embodiment, the covariance matrix generation circuit (e.g., 501 of FIG. 5) may measure the received signal to generate a covariance matrix $R_N$ indicating a correlation between antennas. According to some embodiments, the communication processor 500 may generate a covariance matrix $R_{2N}$ having a level $n+1$ in operation S920, and identify $R_N$ having an N×N size, which is a covariance matrix corresponding to a sub-block in the covariance matrix $R_{2N}$ having a level $n+1$.

In operation S930, the communication processor 500 may generate a whitening filter matrix having a level $n$. The whitening filter matrix of the level $n$ may be $W_N$ having an N×N size. The whitening filter matrix generation circuit (e.g., 503 in FIG. 5) may calculate the whitening filter matrix $W_N$ of the level $n$ based on Equation 5 according to Cholesky decomposition.

In operation S940, the communication processor 500 may generate a covariance matrix of the level $n+1$. The covariance matrix of the level $n+1$ may be $R_{2N}$ having a 2N×2N size. In an embodiment, the covariance matrix generation circuit (e.g., 501 of FIG. 5) may measure the received signal to generate a covariance matrix $R_{2N}$ indicating a correlation between antennas. According to some embodiments, when the covariance matrix $R_{2N}$ of the level $n+1$ is measured first in operation S920, operation S940 may be omitted.

In operation S950, the communication processor 500 may generate a whitening filter matrix having a level $n+1$. The whitening filter matrix having the level $n+1$ may be $W_{2N}$ having a 2N×2N size. The whitening filter matrix generation circuit 503 may calculate C by substituting $A^{-1}$ corresponding to the whitening filter matrix $W_N$ of $R_0$ calculated in operation S930 into Equation 11, and calculate $A^{-1}, C, D^{-1}$ by substituting the calculated C into Equation 12. Thereafter, the whitening filter matrix $W_{2N}$ may be obtained by substituting the calculated $A^{-1}, C, D^{-1}$ into Equation 14.

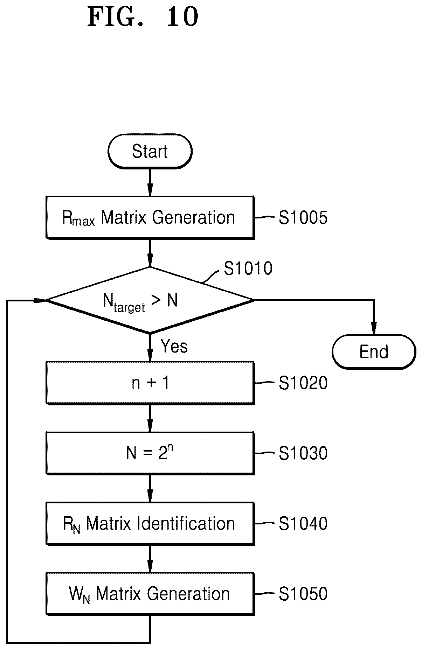

FIG. 10 is a flowchart illustrating an operating method of a communication processor according to embodiments.

Referring to FIG. 10, in operation S1005, the communication processor (e.g., 500 in FIG. 5) may generate a maximum level covariance matrix $R_{max}$. The maximum level may be a level corresponding to a number of reception antennas. For example, when there are 16 reception antennas, the maximum level covariance matrix $R_{max}$ may be 16×16 in size. The covariance matrix generation circuit (e.g., 501 of FIG. 5) may measure the received signal to generate a maximum level covariance matrix $R_{max}$ indicating a correlation between antennas.

In operation S1010, the communication processor (e.g., 500 of FIG. 5) may determine whether a target-level whitening filter matrix has already been generated. For example, the target level may be 4 ($N_{target} = 2^4 = 16$), and the current whitening filter matrix may be a whitening filter $N = 4$ of level 2. In this case, since the level of the current whitening filter matrix is lower than the target level (S1010, Yes), the communication processor 500 may perform operation S1020.

In operation S1020, the communication processor 500 may increase the level of the whitening filter matrix by 1. In operation S1030, since $N = 2^n$, N may be 8. Thereafter, in operation S1040, the communication processor 500 may identify the covariance matrix of level 3. The covariance matrix of level 3 may be 8×8 in size. For example, referring to FIG. 8B together, the maximum level covariance matrix $R_{max}$ may be $R$ and the level 3 covariance matrix may be $R_0$.

In operation S1050, the communication processor 500 may generate a whitening filter matrix of level 3. The level 3 whitening filter matrix may be $W_8$ having an 8×8 size. The whitening filter matrix generation circuit 503 may generate a level 3 whitening filter matrix $W_8$ based on the 8×8 covariance matrix $R_0$ identified in operation S1040 and the 4×4 whitening filter matrix $W_4$ previously generated in the previous iteration.

After operation S1050, the process may return to operation S1010, and it may be determined whether the target level has been reached. When the target level is reached (S1010, No), the communication processor 500 may terminate the procedure. According to an embodiment, when the target level is not reached (S1010, Yes), the communication processor 500 may repeat operations S1020 to S1050.

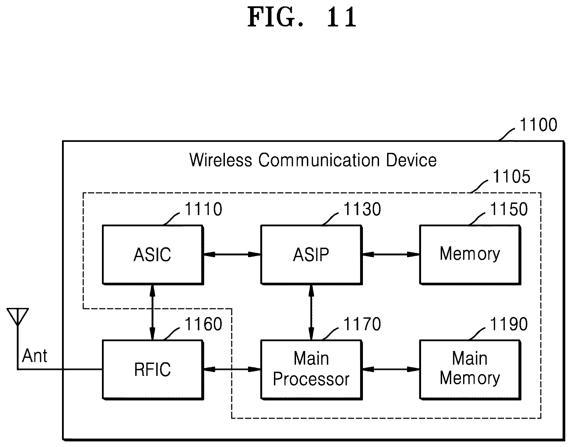

FIG. 11 is a block diagram of a wireless communication device according to an embodiment.

Referring to FIG. 11, a wireless communication device 1100 may include a modem 1105 and a radio frequency integrated circuit (RFIC) 1160, and the modem 1105 may include an application specific integrated circuit (ASIC) 1110 and an application specific instruction set processor (ASIP) 1130, a memory 1150, a main processor 1170, and a main memory 1190. The wireless communication device 1100 of FIG. 11 may be a reception device 200 according to an embodiment.

The RFIC 1160 may be connected to an antenna Ant to receive a signal from the outside or transmit a signal to the outside using a wireless communication network. For example, the antenna Ant may include two or more antennas as described above, for example, with respect the example of FIG. 4. The ASIP 1130 is a customized integrated circuit for a specific purpose, and may support a dedicated instruction set for a specific application and execute instructions included in the instruction set. The memory 1150 may communicate with the ASIP 1130 and may store a plurality of instructions executed by the ASIP 1130 as a non-transitory storage device. For example, the memory 1150 may include, as non-limiting examples, any type of memory accessible by the ASIP 1130, for example, a random access memory (RAM), read only memory (ROM), tape, a magnetic disk, an optical disk, volatile memory, non-volatile memory, and combinations thereof.

The main processor 1170 may control the wireless communication device 1100 by executing a plurality of instructions. For example, the main processor 1170 may control the ASIC 1110 and the ASIP 1130, process data received through a wireless communication network, or process a user input to the wireless communication device 1100.

The main memory 1190 may communicate with the main processor 1170 and may store a plurality of instructions executed by the main processor 1170 as a non-transitory storage device. For example, the main memory 1190 may include, as non-limiting examples, any type of memory accessible by the main processor 1170, for example, RAM, ROM, tape, a magnetic disk, an optical disk, volatile memory, non-volatile memory, and combinations thereof.

For example, in use, the wireless communication device 1100 may receive a communication signal through the antenna Ant, and calculate the whitening filter matrix as described above for reducing interference through various ones of the antennas Ant, and apply the whitening filter matrix to the received signal to remove the interference from the received signal or reduce the interference in the received signal, thus resulting in a clearer voice signal data throughput, and/or increased voice and data throughput, etc.

Embodiments are set out in the following Clauses:

Clause 1. An electronic device comprising:

a communication circuit comprising 2N reception antennas; and

a communication processor including:

a covariance matrix generation circuit that generates a covariance matrix for the 2N reception antennas based on a measurement of a received signal, and
a whitening filter matrix generation circuit that calculates a whitening filter for N reception antennas based on Cholesky decomposition,

wherein the whitening filter matrix generation circuit calculates a whitening filter matrix for the 2N reception antennas based on characteristics of a first whitening filter matrix and the Cholesky decomposition for the first sub-matrix corresponding to a diagonal sub-matrix of the covariance matrix.

Clause 2. The electronic device of Clause 1, wherein the covariance matrix includes a first sub-matrix, a second sub-matrix, a third sub-matrix, and a fourth sub-matrix.

Clause 3. The electronic device of Clause 2, wherein a lower triangular matrix satisfying the Cholesky decomposition for the covariance matrix satisfies the following equation:

$$R = LL^H = \begin{bmatrix} A & 0 \\ C & D \end{bmatrix} \begin{bmatrix} A^H & C^H \\ 0 & D^H \end{bmatrix} = \begin{bmatrix} R_0 & R_1 \\ R_2 & R_3 \end{bmatrix}$$

where $R$ denotes the covariance matrix, $L$ denotes the lower triangular matrix, $A$ denotes the first whitening filter matrix, $C$ denotes a second whitening filter matrix, $D$ denotes a third whitening filter matrix, $R_0$ denotes the first sub-matrix, and $R_3$ denotes the fourth sub-matrix.

Clause 4. The electronic device of Clause 3, wherein the first whitening filter matrix $A$ is an inverse of a matrix satisfying a Cholesky decomposition for the first sub-matrix $R_0$ as in the following equation: $R_0 = AA^H$.

Clause 5. The electronic device of Clause 3 or Clause 4, wherein the second whitening filter matrix $C$ satisfies the following equation: $C = R_2(A^{-1})^H$.

Clause 6. The electronic device of any of Clauses 3-5, wherein the third whitening filter matrix $D$ satisfies a Cholesky decomposition for a permutation matrix $R'$ as in the following equation:

$$R' = DD^H$$

where $R'$ denotes the permutation matrix, satisfying $R_3 - CC^H = R'$.

Clause 7. The electronic device of Clause 6, wherein the whitening filter matrix generation circuit calculates a whitening filter matrix $L^{-1}$ for 2N reception antennas according to the following equation:

$$L^{-1} = \begin{bmatrix} A & 0 \\ C & D \end{bmatrix}^{-1} = \begin{bmatrix} A^{-1} & 0 \\ -D^{-1}CA^{-1} & D^{-1} \end{bmatrix}.$$

Clause 8. The electronic device of any preceding Clause, wherein the communication processor further comprises a symbol detection circuit that detects a symbol based on a signal whitened based on the whitening filter matrix $L^{-1}$ for the 2N reception antennas.

Clause 9. An operating method of an electronic device including 2N reception antennas, the operating method comprising:

generating a covariance matrix for the 2N reception antennas based on a measurement of a received signal;
calculating a first whitening filter matrix for the first sub-matrix;
calculating a second whitening filter matrix based on the third sub-matrix of the covariance matrix and the first whitening filter matrix; and
calculating a third whitening filter matrix satisfying a Cholesky decomposition for the fourth sub-matrix of the covariance matrix and a substitution matrix based on the second whitening filter.

Clause 10. The operating method of Clause 9, wherein the covariance matrix includes a first sub-matrix corresponding to a diagonal sub-matrix of the covariance matrix, a second sub-matrix, a third sub-matrix and a fourth sub-matrix.

Clause 11. The operating method of Clause 10, wherein a lower triangular matrix satisfying the Cholesky decomposition for the covariance matrix satisfies the following equation:

$$R = LL^H = \begin{bmatrix} A & 0 \\ C & D \end{bmatrix} \begin{bmatrix} A^H & C^H \\ 0 & D^H \end{bmatrix} = \begin{bmatrix} R_0 & R_1 \\ R_2 & R_3 \end{bmatrix}$$

where $R$ denotes the covariance matrix, $L$ denotes the lower triangular matrix, $A$ denotes the first whitening filter matrix, $C$ denotes the second whitening filter matrix, $D$ denotes the third whitening filter matrix, $R_0$ denotes the first sub-matrix, $R_2$ denotes the third sub-matrix, and $R_3$ denotes the fourth sub-matrix.

Clause 12. The operating method of Clause 11, wherein the first whitening filter matrix $A$ is an inverse of a matrix satisfying a Cholesky decomposition for the first sub-matrix $R_0$ as in the following equation: $R_0 = AA^H$.

Clause 13. The operation method of Clause 11 or Clause 12, wherein the second whitening filter matrix $C$ satisfies the following equation: $C = R_2(A^{-1})^H$.

Clause 14. The operating method of any of Clauses 11-13, wherein the third whitening filter matrix $D$ satisfies a Cholesky decomposition for a permutation matrix $R'$ as in the following equation:

$$R' = DD^H$$

where $R'$ denotes the permutation matrix, satisfying $R_3 - CC^H = R'$.

Clause 15. The operating method of Clause 14, further comprising calculating a whitening filter matrix $L^{-1}$ for 2N reception antennas according to the following equation:

$$L^{-1} = \begin{bmatrix} A & 0 \\ C & D \end{bmatrix}^{-1} = \begin{bmatrix} A^{-1} & 0 \\ -D^{-1}CA^{-1} & D^{-1} \end{bmatrix}.$$

While various embodiments been particularly shown and described with reference to the drawings, it will be understood that various changes in form and details may be made therein without departing from the scope of the following claims.

## Claims

1. An electronic device comprising:

   a communication circuit comprising 2N reception antennas; and
   a communication processor (500) including:

      a covariance matrix generation circuit (501) configured to generate a covariance matrix for the 2N reception antennas based on a measurement of a received signal, and
      a whitening filter matrix generation circuit (503) configured to calculate a whitening filter for N reception antennas based on Cholesky decomposition,

   wherein the whitening filter matrix generation circuit (503) is configured to calculate a whitening filter matrix for the 2N reception antennas based on characteristics of the Cholesky decomposition and a first whitening filter matrix for a first sub-matrix corresponding to a diagonal sub-matrix of the covariance matrix.

2. The electronic device of claim 1, wherein the covariance matrix includes the first sub-matrix, a second sub-matrix, a third sub-matrix, and a fourth sub-matrix.

3. The electronic device of claim 2, wherein a lower triangular matrix satisfying the Cholesky decomposition for the covariance matrix satisfies the following equation:

$$R = LL^H = \begin{bmatrix} A & 0 \\ C & D \end{bmatrix}\begin{bmatrix} A^H & C^H \\ 0 & D^H \end{bmatrix} = \begin{bmatrix} R_0 & R_1 \\ R_2 & R_3 \end{bmatrix}$$

   where $R$ denotes the covariance matrix, $L$ denotes the lower triangular matrix, $A$ denotes the first whitening filter matrix, $C$ denotes a second whitening filter matrix, $D$ denotes a third whitening filter matrix, $R_0$ denotes the first sub-matrix, $R_1$ denotes the second sub-matrix, $R_2$ denotes the third sub-matrix, and $R_3$ denotes the fourth sub-matrix.

4. The electronic device of claim 3, wherein the first whitening filter matrix $A$ is an inverse of a matrix satisfying a Cholesky decomposition for the first sub-matrix $R_0$ as in the following equation: $R_0 = AA^H$.

5. The electronic device of claim 3 or claim 4, wherein the second whitening filter matrix $C$ satisfies the following equation: $C = R_2(A^{-1})^H$,

6. The electronic device of any of claims 3-5, wherein the third whitening filter matrix $D$ satisfies a Cholesky decomposition for a permutation matrix $R'$ as in the following equation:

$$R' = DD^H$$

where $R'$ denotes the permutation matrix, satisfying $R_3 - CC^H = R'$.

7. The electronic device of claim 6, wherein the whitening filter matrix generation circuit (503) is configured to calculate the whitening filter matrix $L^{-1}$ for the 2N reception antennas according to the following equation:

$$L^{-1} = \begin{bmatrix} A & 0 \\ C & D \end{bmatrix}^{-1} = \begin{bmatrix} A^{-1} & 0 \\ -D^{-1}CA^{-1} & D^{-1} \end{bmatrix}.$$

8. The electronic device of any preceding claim, wherein the communication processor (500) further comprises a symbol detection circuit (505) that is configured to detect a symbol based on a signal whitened based on the whitening filter matrix for the 2N reception antennas.

9. An operating method of an electronic device including 2N reception antennas, the operating method comprising:

generating a covariance matrix for the 2N reception antennas based on a measurement of a received signal, wherein the covariance matrix includes a first sub-matrix corresponding to a diagonal sub-matrix of the covariance matrix, a second sub-matrix, a third sub-matrix and a fourth sub-matrix;
calculating a first whitening filter matrix for the first sub-matrix;
calculating a second whitening filter matrix based on the third sub-matrix of the covariance matrix and the first whitening filter matrix; and
calculating a third whitening filter matrix satisfying a Cholesky decomposition for the fourth sub-matrix of the covariance matrix and a substitution matrix based on the second whitening filter.

10. The operating method of claim 9, wherein a lower triangular matrix satisfying the Cholesky decomposition for the covariance matrix satisfies the following equation:

$$R = LL^H = \begin{bmatrix} A & 0 \\ C & D \end{bmatrix}\begin{bmatrix} A^H & C^H \\ 0 & D^H \end{bmatrix} = \begin{bmatrix} R_0 & R_1 \\ R_2 & R_3 \end{bmatrix}$$

where $R$ denotes the covariance matrix, $L$ denotes the lower triangular matrix, $A$ denotes the first whitening filter matrix, $C$ denotes the second whitening filter matrix, $D$ denotes the third whitening filter matrix, $R_0$ denotes the first sub-matrix, $R_1$ denotes the second sub-matrix, $R_2$ denotes the third sub-matrix, and $R_3$ denotes the fourth sub-matrix.

11. The operating method of claim 10, wherein the first whitening filter matrix $A$ is an inverse of a matrix satisfying a Cholesky decomposition for the first sub-matrix $R_0$ as in the following equation: $R_0 = AA^H$.

12. The operation method of claim 10 or claim 11, wherein the second whitening filter matrix $C$ satisfies the following equation: $C = R_2(A^{-1})^H$,

13. The operating method of any of claims 10-12, wherein the third whitening filter matrix $D$ satisfies a Cholesky decomposition for a permutation matrix $R'$ as in the following equation:

$$R' = DD^H$$

where $R'$ denotes the permutation matrix, satisfying $R_3 - CC^H = R'$.

14. The operating method of claim 13, further comprising calculating a whitening filter matrix $L^{-1}$ for 2N reception antennas according to the following equation:

$$L^{-1} = \begin{bmatrix} A & 0 \\ C & D \end{bmatrix}^{-1} = \begin{bmatrix} A^{-1} & 0 \\ -D^{-1}CA^{-1} & D^{-1} \end{bmatrix}.$$

# FIG. 1

<u>10</u>

```
┌─────────────────────────────┐          ┌─────────────────────────────┐
│         ┌100                 │          │         ┌200                 │
│  TRANSMISSION DEVICE         │          │    RECEPTION DEVICE          │
│                              │          │                              │
│   ┌110          ┌120         │          │   ┌210          ┌220         │
│  ┌─────────┐  ┌────────────┐ │ ◄═════►  │ ┌─────────┐  ┌───────────┐   │
│  │ ENCODER ├─►│ DESERIALZER│ │          │ │  MIMO   ├─►│  DECODER  │   │
│  └─────────┘  └────────────┘ │          │ │ DETECTOR│  └───────────┘   │
│                              │          │ └─────────┘                  │
└─────────────────────────────┘          └─────────────────────────────┘
```

# FIG. 2

# FIG. 3

_203_

_310_ _320_ _330-1_ _340_

| | | FIRST RECEPTION PATH | |
|---|---|---|---|

DECODING AND DEMODULATION CIRCUIT

DIGITAL BEAMFORMING CIRCUIT

⋮

ANALOG BEAMFORMING CIRCUIT

⋮

_330-N_

NTH RECEPTION PATH

FIG. 4

# FIG. 5

500

## COMMUNICATION PROCESSOR (Modem)

| 501 | 503 |
|---|---|
| COVARIANCE MATRIX GENERATION CIRCUIT | WHITENING FILTER MATRIX GENERATION CIRCUIT |

505

SYMBOL DETECTION CIRCUIT

# FIG. 6

$R_{2N}$ → | WHITENING FILTER MATRIX GENERATION CIRCUIT | → $W_{2N}$

$W_N$ →

600

# FIG. 7

COVARIANCE MATRIX GENERATION CIRCUIT — 710

WHITENING FILTER MATRIX GENERATION CIRCUIT — 720

700

FIG. 8A

# FIG. 8B

# FIG. 9

```
                    ┌──────────┐
                    │  Start   │
                    └────┬─────┘
                         │
                         ▼
        ┌─────────────────────────────┐
        │          N = 2^n            │──── S910
        └─────────────┬───────────────┘
                      │
                      ▼
        ┌─────────────────────────────┐
        │   R_N Matrix Generation     │──── S920
        └─────────────┬───────────────┘
                      │
                      ▼
        ┌─────────────────────────────┐
        │   W_N Matrix Generation     │──── S930
        └─────────────┬───────────────┘
                      │
                      ▼
        ┌─────────────────────────────┐
        │   R_2N Matrix Generation    │──── S940
        └─────────────┬───────────────┘
                      │
                      ▼
        ┌─────────────────────────────┐
        │   W_2N Matrix Generation    │──── S950
        └─────────────┬───────────────┘
                      │
                      ▼
                ┌──────────┐
                │   End    │
                └──────────┘
```

# FIG. 10

```
                    ┌──────────────┐
                    │    Start     │
                    └──────┬───────┘
                           │
                           ▼
        ┌──────────────────────────────────┐
        │ R_max Matrix Generation          │── S1005
        └──────────────────┬───────────────┘
                           │        S1010
                           ▼      ╱
              ◇─────────────────────◇
              │   N_target > N      │─────────────┐
              ◇─────────────────────◇             │
                           │ Yes                   ▼
                           ▼              ┌──────────────┐
        ┌──────────────────────────────┐ │     End      │
        │           n + 1              │── S1020
        └──────────────────┬───────────┘
                           │
                           ▼
        ┌──────────────────────────────┐
        │           N = 2^n            │── S1030
        └──────────────────┬───────────┘
                           │
                           ▼
        ┌──────────────────────────────┐
        │  R_N Matrix Identification   │── S1040
        └──────────────────┬───────────┘
                           │
                           ▼
        ┌──────────────────────────────┐
        │   W_N Matrix Generation      │── S1050
        └──────────────────┬───────────┘
                           │
```

FIG. 11

**EUROPEAN SEARCH REPORT**

Application Number

EP 25 20 7585

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 11 228 359 B1 (YABLONKA TOMER [IL]) 18 January 2022 (2022-01-18) * column 5, line 22 - column 6, line 3 * ----- | 1-14 | INV. H04B7/0413 H04L25/02 |
| Y | MAHMOOD ET AL: "A fast banded matrix inversion using connectivity of Schur's complements", PROCEEDINGS OF THE INTERNATIONAL CONFERENCE ON SYSTEMS ENGINEERING. FAIRBORN, AUG. 1 - 3, 1991; [PROCEEDINGS OF THE INTERNATIONAL CONFERENCE ON SYSTEMS ENGINEERING], NEW YORK, IEEE, US, 1 August 1991 (1991-08-01), pages 303-306, XP032129940, DOI: 10.1109/ICSYSE.1991.161139 ISBN: 978-0-7803-0173-3 * the whole document * ----- | 1-14 | |

**TECHNICAL FIELDS SEARCHED (IPC)**

H04B
H04L

The present search report has been drawn up for all claims

| Place of search | Date of completion of the search | Examiner |
|---|---|---|
| Munich | 2 February 2026 | Neeb, Christoph |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

 
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 25 20 7585

This annex lists the patent family members relating to the patent documents cited in the above-mentioned European search report.
The members are as contained in the European Patent Office EDP file on
The European Patent Office is in no way liable for these particulars which are merely given for the purpose of information.

02-02-2026

| Patent document cited in search report | | Publication date | Patent family member(s) | | Publication date |
|---|---|---|---|---|---|
| US 11228359 | B1 | 18-01-2022 | EP | 4024795 A1 | 06-07-2022 |
| | | | US | 11228359 B1 | 18-01-2022 |

EPO FORM P0459

For more details about this annex : see Official Journal of the European Patent Office, No. 12/82